# EUROPÄISCHE PATENTSCHRIFT

(11) **EP 3 191 230 B1**
(45) Veröffentlichungstag und Bekanntmachung des Hinweises auf die Patenterteilung: **09.10.2019**
(21) Anmeldenummer: 15750249.3
(22) Anmeldetag: 07.08.2015
(51) Int. Cl.: B05C 5/02, B05D 1/26, H01M 4/04, B05C 11/10

(54) **VERFAHREN UND VORRICHTUNG ZUM INTERMITTIERENDEN BESCHICHTEN**
METHOD AND DEVICE FOR INTERMITTENT COATING
PROCÉDÉ ET DISPOSITIF DE REVÊTEMENT PAR INTERMITTENCE

(30) Priorität: 09.09.2014 DE 102014112977
(43) Veröffentlichungstag der Anmeldung: 19.07.2017
(73) Patentinhaber: Karlsruher Institut für Technologie, 76131 Karlsruhe (DE)
(72) Erfinder: SCHARFER, Philip, 76344 Eggenstein-Leopoldshafen (DE); SCHMITT, Marcel, 76135 Karlsruhe (DE); SCHABEL, Wilhelm, 76229 Karlsruhe (DE); DIEHM, Ralf, 97877 Wertheim (DE)
(86) Internationale Anmeldenummer: PCT/EP2015/001633
(87) Internationale Veröffentlichungsnummer: WO 2016/037674

(56) Entgegenhaltungen:
- US-A- 4 938 994
- US-A1- 2002 017 238
- US-B1- 6 455 105

## Beschreibung

Die Erfindung betrifft ein Verfahren und eine Vorrichtung zum intermittierenden Beschichten eines bewegten Substrats.

Aus der japanischen Patentoffenlegungsschrift JP 2001 191 005 A ist eine Vorrichtung zum intermittierenden Auftragen von Klebstoff auf einen kontinuierlich laufenden Körper bekannt. Hier wird ein Verfahren offengelegt, welches eine Heißschmelze einer Düse zuführt und auf ein kontinuierlich laufendes Substrat aufträgt. Es wird beschrieben dass die Zufuhr von Heißschmelze zu der Düse unterbrochen wird, wenn keine Beschichtung hergestellt werden soll. Indem dieser Vorgang wiederholt wird, wird ein Substrat intermittierend beschichtet.

Alternativ wird ein intermittierendes Beschichten dadurch erreicht indem der Beschichtungsspalt zwischen der Düse und dem Substrat mit jeder Beschichtungsunterbrechung zu vergrößern. Der dennoch vorhandene Nachlauf des Beschichtungsstoffs benetzt allerdings die Düsenlippen was bei einer erneuten Annäherung an das Substrat (Ableiterfolie) zu einer Überhöhung der Startkante führt.
Nachteilig an diesem Ansatz ist auch, dass durch die Bewegung der Düse und das Aufsetzten der benetzten Düsenlippen auf das Substrat, Vibrationen in dem Substrat verursacht werden, welche wiederum den Abstand der Düsenlippen zum Substrat beeinflussen. Demensprechend ist es nicht möglich, eine kontinuierliche Nassfilmdicke zu realisieren.

Sekundäre Lithium-Ionen Batterien basieren auf einer Anordnung von mehreren elektrochemischen Zellen. Die Elektroden in einer elektrochemischen Zelle weisen jeweils ein Aktivmaterial auf, aus dem während des Betriebs der elektrochemischen Zelle Lithium-Ionen in die Elektroden interkaliert werden. In der negativen Elektrode (Kathode) werden als Aktivmaterial lithiumhaltiges Verbundoxid, bevorzugt LiCoO₂, LiFePO₄, LiNi_{1/3}Co_{1/3}Mn_{1/3}O₂ (NCM) oder LiNi_{0,8}Co_{0,15}Al_{0,05}O₂ (NCA), mesoporöses Titanoxid, und in der positiven Elektrode (Anode) Leitruß, Ruß, Graphit o.ä. eingesetzt.

Aus der DE 10 2004 012 476 A1 sind geeignete Beschichtungsstoffe und deren Herstellung bekannt und werden hiermit durch das Referenzieren mit in die Anmeldung einbezogen.
Bei einem hier vorgeschlagenen Beschichtungsverfahren wird der für die Kathoden- bzw. Anodenbeschichtungsmasse (Beschichtungsstoff) erforderliche Polymerbinder gelöst z.B. in 5-10%ige Fluorelastomer-Homo- oder Copolymerisate in N-Methyl-pyrrolidon (NMP) und die dabei entstehende Polymerlösung mit den kathoden- bzw. anodenspezifischen Zusätzen wie Lithium interkalierbare Metalloxide bzw. Lithium interkalierbare Kohlenstoffe (Leitruß, Ruß, Graphit o.ä.) versetzt und dispergiert. Dann wird diese Dispersion mit einer Filmbeschichtungstechnik auf das Substrat hier die Stromkollektoren bzw. ein Sammelkörper wie Folien, Bändern, Netzen o.ä. aufgetragen.

Alternativ kann auch Polyvinyliden-Fluorid als Binder auf der Kathodenseite und Styrol-Butadien-Kautschuk auf der Anodenseite,zur Verbesserung der mechanischen Festigkeit eingesetzt werden und mit Leitruß (Leitfähigkeitsruß), zur Erhöhung der elektrischen Leitfähigkeit versehen werden. Die Aktivmaterialien werden dementsprechend in Form von Pasten (Beschichtungsstoff) unter Einsatz von Lösungsmitteln sowie Carboxymethylcellulose als Verdicker auf das Substrat bzw. das metallische Ableitermaterial aufgebracht.

Aufgrund der geringen elektrischen Leitfähigkeit der porösen, partikulären Schichtmorphologien, weist die aufgetragene Elektrodenschicht (Nassfilm) mangelhafte Entladungsrateneigenschaften auf. Um die Elektrizitätssammelfähigkeit zu erhöhen, muss daher die aufgetragene Elektrodenschicht, welche auf dem elektrisch leitenden Substrat (Sammelkörper, Elektrode) aufgetragen wird, so dünn wie möglich ausgeführt sein. Vorzugsweise werden hier Nassfilmdicken der Menisken zwischen 10 µm (hohe Leistung) und 850 µm (hohe Kapazitäten) angestrebt.

M. Schmitt et al., "Slot-die processing of lithium-ion battery electrodes-Coating window characterization", Chemical Engineering and Processing: Process Intensification, Volume 68, June 2013, Pages 32-37 sowie M. Schmitt et al. "Slot die coating of lithium-ion battery electrodes: investigations on edge effect issues for stripe and pattern coatings", Journal of Coatings Technology and Research January 2014, Volume 11, Issue 1, pp 57-63 lehren ein geeignetes Verfahren zum Beschichten von Folienelektroden mit einer Schlitzdüse sowie die optimalen Betriebsbedingungen zur Durchführung dieses Verfahrens betreffend der geometrischen Abmaße einer geeigneten Vorrichtung und werden hiermit durch das Referenzieren mit in die Anmeldung einbezogen.

Um exakte (Film-)Start-und (Film-)Stopkanten der Schichten bzw. der Beschichtungsabschnitte zu erhalten, ist bereits aus der DE 10 246 327 A1 bekannt, den Beschichtungsstoff, nach dem Absperren (Verschließen) des Zulaufkanals, zurückzuziehen, dieser Effekt ist als der sogenannte "Snuff-Back" bekannt. Der Beschichtungsstoff wird nach dem Sperrmittel und vor dem Austritt, einen Unterdruck entgegengesetzt der ursprünglichen Flussrichtung gestoppt und zurück bewegt.

Eine Alternative hierzu offenbart die US 2002/0017238 A1 in dieser ist eine Vorrichtung offenbart, welche eine intermittierende Beschichtung auf ein bewegtes Substrat aufträgt, wobei die Beschichtungsunterbrechung nicht durch Verschließen durch eine Sperrmittel in Verbindung mit einem Snuff-Back vor dem Austritt hervorgerufen wird, sondern durch eine Kombination aus Änderung des Innvolumens der Schlitzdüse in Verbindung mit einem Snuff-Back-Effekt. Dies wird durch das aktive Hin- und Herbewegen des flexiblen Elements durch eine Verstelleinheit in einem Düsenbacken hervorgerufen. Die aktive Volumenvergrößerung bewirkt eine Sogwirkung wodurch der Snuff-Back auf den Beschichtungsstoff in dem Austrittsspalt wirkt. Dementsprechend wird die Flussrichtung und die in dem Beschichtungsstoff anliegende Scherspannung τ in ihrer Richtung umgekehrt. Der Beschichtungsstoff wird hier vor dem Auftragen auf dem Substrat, zeitweise in der mit Unterdruck beaufschlagten Kavität oder in dem flexiblen Volumen gespeichert. Der gespeicherte Beschichtungsstoff wird dann während eines darauf folgenden Beschichtungszyklus aufgetragen.

Es hat sich aber gezeigt, dass hierdurch unerwünschte Druckschwankungen bzw. Druckspitzen in dem System auftreten, welche gerade beim Starten des Beschichtungsvorgangs zu Störungen führt. Durch das schlagartige Öffnen des Sperrmittels (Ventil) treten Druckspitzen auf. Auch durch- das verkleinern des flexiblen Innenvolumens, wobei der in der Kavität gespeicherten Beschichtungsstoff dem Fördervolumenstrom wieder zugeführt wird, bildet sich eine undefinierte Anlaufströmung in dem Düsenschlitz aus. Ursache hierfür ist, dass die Scherspannung τ des Fördervolumenstroms eine andere Richtung als die des durch den Snuff-Back zurückgehaltenen Teilvolumenstroms hat.
Somit muss erst eine Richtungsänderung der Scherspannung des zurückgehaltenen Teilvolumenstroms,erzwungen werden um eine genügend hohe stationäre Scherung bzw. Scherspannung τ in Richtung des Düsenaustritts zu erhalten. Dementsprechend ist die Anlaufströmung zu gering ausgeprägt, und es bilden sich unerwünschten Quer- bzw. Längsstreifen auf den erzeugten Beschichtungen.

Des Weiteren sind die Fließ- und Verarbeitungseigenschaften des Beschichtungsstoffs zur Herstellung von Elektrodenschichten für Li-Ionen-Zellen entscheidend für Auslegung der Vorrichtung und des Verfahrens. Hier werden Schergeschwindigkeiten γ̇ (Scherraten) des Beschichtungsstoffs von bis zu 100. 000 s⁻¹ erreicht. Die Schergeschwindigkeit wird berechnet aus dem Verhältnis zwischen dem Geschwindigkeitsunterschied zweier benachbarter. Flüssigkeitsschichten und deren Abstand. Mathematisch ausgedrückt ist die Schergeschwindigkeit der Gradient des Geschwindigkeitsfeldes.
Dies ist gerade für die hier zum einsatzkommenden Beschichtungsstoffe entscheidend, da diese sich strukturviskos bzw. scherverdünnend verhalten. Somit setzt ein Volumenstrom erst bei der Einwirkung einer Schubspannung τ oberhalb einer minimalen Schubspannung τ_{f} (Fließgrenze) ein.

Ein weiterer Nachteil, der aus dem Stand der Technik bekannten Vorrichtungen ist, dass diese nur intermittierend sequentielle Beschichtungen auftragen. Ein zeitgleiches Auftragen mehrerer Schichten aufeinander ist nicht vorgesehen.

Ausgehend hiervon liegt die **Aufgabe** der Erfindung darin, eine Vorrichtung und ein Verfahren vorzuschlagen, welche eine intermittierende Beschichtung eines bewegten Substrats bei einer konstanten Nassfilmdicke unter Einhaltung exakter Filmkanten gewährleistet und somit die Nachteile und Einschränkungen, welche aus dem Stand der Technik bekannt sind, vermeidet.

**Gelöst** wird die Aufgabe im Hinblick auf die Erzeugung von exakten Filmstartkanten und Filmstoppkanten durch eine Vorrichtung zum intermittierenden Beschichten eines in Bewegung befindlichen Substrats mit den Merkmalen nach Anspruch 1 und im Hinblick auf das Verfahren durch die Verfahrensschritte gemäß der jeweiligen Ansprüche 5, 6 und 7. Weiterbildungen bzw. bevorzugte Ausführungsformen der Vorrichtung bzw. des Verfahrens sind in den Unteransprüchen ausgeführt.

**Zur Lösung der Aufgabe** wird eine Vorrichtung vorgeschlagen, welche einen Düsenkörper mit mindestens zwei Düsenbacken umfasst. Zwischen den gegenüberliegenden Düsenbacken ist eine Einlagefolie mit mindestens einer Aussparung vorgesehen. Die Aussparung in der Einlagefolie bildet mindestens einen Düsenschlitz innerhalb des Düsenkörpers aus. Der Düsenschlitz endet quer zur Transportrichtung U des Substrats relativ zum Düsenkörper und parallel zum Substrat als Austrittsspalt des Düsenkörpers, wobei der Austrittsspalt über den Düsenschlitz in Strömungsverbindung mit dem Zulaufkanal ist. Wenigstens eine Düsenbacke ist mit mindestens zwei Durchbrüchen versehen, welche in den Düsenschlitz ausmünden und jeweils mit einem elastischen verformbaren Element in Verbindung mit einer Abdeckung und einem Dichtelement zum Düsenschlitz und zur unter Ausbildung eines Volumens hin verschlossen sind. Jedes elastisch verformbare Element ist einerseits mit dem Beschichtungsstoff im Düsenschlitz und andererseits mit einem Aktor verbunden. Die mindestens zwei Durchbrüche ausmünden seriell in den Düsenschlitz.

Die Durchbrüche eines Düsenbackens sind aufeinanderfolgend in Flussrichtung q des Beschichtungsstoffs, ausgehend vom Zulaufkanal zum Austrittsspalts angeordnet sind. Die elastischen verformbaren Elemente sind durch die Aktoren wechselseitig zwischen jeweils zwei Schaltstellungen unter Veränderung des jeweiligen Volumens be- und entlastbar.

Nach Anspruch 5 besteht das Verfahren zum intermittierenden Beschichten von einem bewegenden Substrat aus folgenden Verfahrenschritten, wobei der Fördervolumenstrom q des Beschichtungsstoffs über alle Verfahrensschritte konstant bleibt:
Der Beschichtungsstoff wird mittels einer Pumpe ausgehend vom Zuführkanal über den Düsenschlitz mit konstantem Fördervolumenstrom q zum Austrittsspalt gefördert.
Durch das Entlasten (erste Schaltstellung) des flexiblen Elements, welches dem Austrittsspalt am nächsten liegt, herbeigeführt durch die Reduzierung der Kraft oder auch Gegenkraft des zugehörigen Aktors und durch zeitgleiches Belasten (zweite Schaltstellung) des flexiblen Elements, welches dem Zuführkanal am nächsten liegt, herbeigeführt durch Anhebung der Gegenkraft des zugehörigen Aktors, wird das Auftragen des Beschichtungsstoffs auf das Substrat unterbrochen. Das Be- und Entlasten des bzw. der Aktoren wird hierbei als Schaltzustand bezeichnet, wobei in jedem Schaltzustand sich die Richtung der durch den Aktor ausgeübten Kraft auf das flexible Element nicht ändert sondern nur der Betrag der ausgeübten Kraft.
Durch das Belasten des flexiblen Elements, welches dem Austrittsspalt am nächsten liegt, herbeigeführt durch die Anhebung der Gegenkraft des zugehörigen Aktors und das zeitgleiche Entlasten des flexiblen Elements, welches dem Zuführkanal am nächsten liegt, herbeigeführt durch die Reduzierung der Gegenkraft des zugehörigen Aktors, wird das Auftragen des Beschichtungsstoffs auf das Substrat wieder hergestellt.

Nach Anspruch 6 besteht das Verfahren zum intermittierenden Beschichten von einem in Bewegung befindlichen Substrat aus folgenden Verfahrenschritten, wobei der Fördervolumenstrom der Beschichtungsstoffe oder des Beschichtungsstoffs qₐ und q_{b} über alle Verfahrensschritte konstant bleiben und sich die Beschichtungsabschnitte überlagern:
Der Beschichtungsstoff oder die Beschichtungsstoffe A,B wird bzw. werden mittels einer' oder zwei Pumpen ausgehend vom zugehörigen Zuführkanal über den jeweiligen Düsenschlitz zum korrespondierenden Austrittsspalt gefördert.
Durch das zeitgleiche Entlasten (erste Schaltstellung) der flexiblen Elemente, welche dem jeweiligen Austrittsspalt am nächsten liegen, herbeigeführt durch das Reduzieren der Gegenkraft des zugehörigen Aktors, und durch zeitgleiches Belasten der flexiblen Elemente, welche dem jeweiligen Zuführkanal am nächsten liegen, herbeigeführt durch die Erhöhung der Gegenkraft (zweite Schaltstellung) des zugehörigen Aktors, wird das Auftragen der Beschichtungsstoffe A,B oder des Beschichtungsstoffs auf das Substrat unterbrochen.
Durch das zeitgleiche Belasten der flexiblen Elemente, welche dem jeweiligen Austrittsspalt am nächsten liegen, herbeigeführt durch die Erhöhung der Gegenkraft (zweite Schaltstellung) des zugehörigen Aktors und das zeitgleiche Entlasten der flexiblen Elemente, welche dem jeweiligen Zuführkanal am nächsten liegen, herbeigeführt durch die Reduzierung der Gegenkraft (zweite Schaltstellung) des zugehörigen Aktors, wird das Auftragen der Beschichtungsstoffe oder des Beschichtungsstoffs auf das Substrat wieder hergestellt.

Nach Anspruch 7 besteht das Verfahren zum intermittierenden Beschichten von einem in Bewegung befindlichen Substrat aus folgenden Verfahrenschritten, wobei der Fördervolumenstrom qₐ und q_{b} der Beschichtungsstoffe über alle Verfahrensschritte konstant bleiben und sich die Beschichtungsabschnitte **nicht** überlagern:
Die oder der Beschichtungsstoff wird mittels einer Pumpe ausgehend vom zugehörigen Zuführkanal über den jeweiligen Düsenschlitz zum korrespondierenden Austrittsspalt gefördert.
Durch das Entlasten des flexiblen Elements in einem Düsenbacken welches dem Austrittsspalt am nächsten liegt, herbeigeführt durch die Reduzierung der Gegenkraft (erste Schaltstellung) des zugehörigen Aktors, und durch zeitgleiches Belasten des flexiblen Elements, welche dem Zuführkanal am nächsten liegt, herbeigeführt durch die Erhöhung der Gegenkraft (zweite Schaltstellung) des zugehörigen Aktors, wird das Auftragen des Beschichtungsstoffs durch diesen Düsenspalt auf das Substrat unterbrochen.

Zeitgleich wird in dem gegenüberliegenden Düsenbacken durch das Belasten des flexiblen Elements, welches dem Austrittsspalt am nächsten liegt, herbeigeführt durch die die Erhöhung der Gegenkraft (zweite Schaltstellung) des zugehörigen Aktors und das zeitgleiche Entlasten des flexiblen Elements, welches dem Zuführkanal am nächsten liegt, herbeigeführt durch die Reduzierung der Gegenkraft (erste Schaltstellung) des zugehörigen Aktors, das Auftragen des Beschichtungsstoffs auf das Substrat ausgeführt.
Anschließend wird das Verfahren in umgekehrter Reihenfolge wiederholt.

### Beschreibung eines oder mehrerer Ausfühnmgsbeispiele:

Die Erfindung wird im Folgenden anhand von Ausführungsbeispielen und den Figuren näher erläutert. Hierbei zeigen:
**Fig. 1a****:** Schematische Darstellungen einer erfindungsgemäßen Vorrichtung zum intermittierenden Beschichten mit variablem Innenvolumen während der Beschichtungsphase.
**Fig. 1b****:** Schematische Darstellung der geometrischen Verhältnisse am Austrittspalt
**Fig. 1c****:** Schematische Darstellungen einer erfindungsgemäßen Vorrichtung zum intermittierenden Beschichten mit variablemInnenvolumen, während des Beginns der Unterbrechungsphase.
**Fig. 1d****:** Schematische Darstellungen einer erfindungsgemäßen Vorrichtung zum intermittierenden Beschichten mit variablem Innenvolumen, während dem Ende der Uriterbrechungsphase bzw. Start der Beschichtungsphase.
**Fig. 2a****:** Schematische Darstellungen' einer erfindungsgemäßen Vorrichtung zum intermittierenden Beschichten mit variablem Innenvolumen mit Doppelspalt
**Fig. 2b****:** Schematische Darstellung der geometrischen Verhältnisse am Austrittspalt
   einer erfindungsgemäßen Vorrichtung mit Doppelspalt

Es folgt die Erläuterung der Erfindung anhand der Zeichnungen nach Aufbau und ggf. auch nach Wirkungsweise der dargestellten Erfindung.

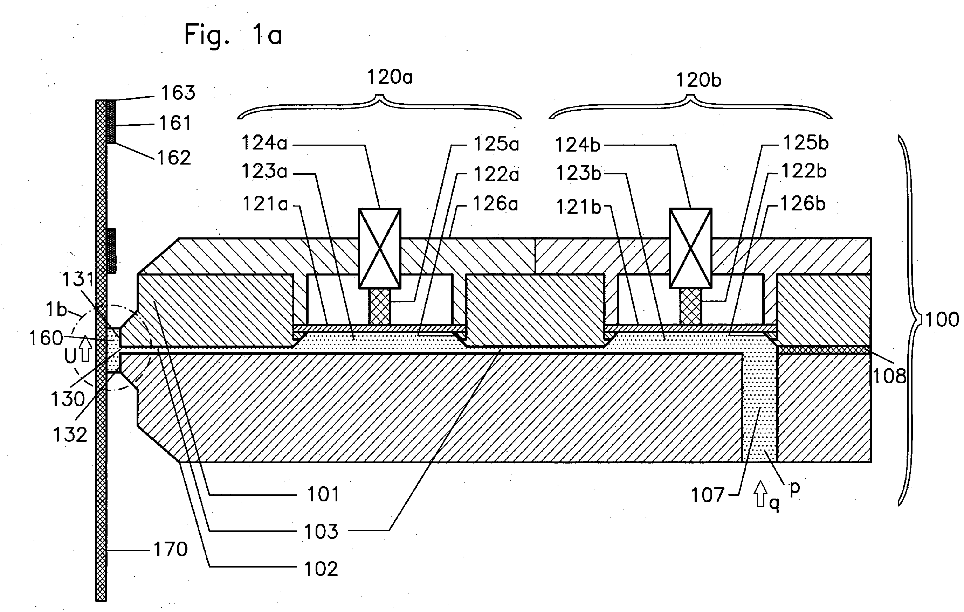

### Fig. 1a: Schematische Darstellungen einer erfindungsgemäßen Vorrichtung zum intermittierenden Beschichten mit variablem Innenvolumen während der Beschichtungsphase.

In Fig. 1a ist ein Schnitt durch eine erfindungsgemäße Vorrichtung zum intermittierenden Beschichten 100 mit variablem Innenvolumen dargestellt. Zwischen zwei Düsenbacken 101, 102 wird ein Düsenschlitz 103 mittels einer Einlagefolie 108 mit einer Aussparung (nicht dargestellt) eingestellt. Die Einlagefolie 108 erstreckt sich über die gesamte Länge und Breite der Düsenbacken 101,102 und ist vorzugsweise in Metall mit einer Dicke zwischen 0,01 mm und 3,00 mm, vorzugsweise zwischen 0,05 mm und 1,0 mm, besonders bevorzugt zwischen 0,3 mm und 0,5 mm ausgeführt. Die Aussparung (nicht dargestellt) bildet im Zusammenbau eine Kavität aus, welche sich von dem Zulaufkanal 107 bis zum Austrittsspalt 130 erstreckt. Der Austrittsspalt 130 der Vorrichtung ist hierbei quer zur Transportrichtung U des Substrats 170 und parallel zum Substrat 170 positioniert.

Vor dem Düsenaustritt 130 ist in der Düsenbacke 101 ein Durchbruch 123 vorgesehen, wobei in dem Durchbruch 123 eine Verstelleinheit 120a integriert ist. Die Anordnung umfasst ein flexibles Element 121a, wobei flexibel hier im Sinne von nachgiebig bzw. biegsam definiert wird, zugehörig ist ein Dichtelement 122a, eine Aktor 124a, ein zugehöriger flächiger Aufsatz 125a und eine Abdeckung 126a. Das elastisch verformbare Element 121a wird hierzu an den Randbereichen im Durchbruch 123a von einem Dichtelement 122a und der Abdeckung 126a in ihrer Position auf einer Nase im Düsenbacken 101 fixiert und abgedichtet. Durch das elastisch verformbare Element 121a kann der Düsenschlitz 103, in seiner Höhe und somit das Gesamtvolumen des Düsenschlitzes 103 variiert werden. Zur Überwachung der Verformung des flexiblen Elements 121a und somit des variablen Volumens im Düsenschlitz 103, ist eine geeignete Sensorik (nicht dargestellt) in der Abdeckung 126a integriert.

Im zentralen Bereich des flexiblen Elements 121a ist ein Aktor 124a vorgesehen. Der Aktor 124a ist mit dem flexiblen Element 121a durch einen Aufsatz 125a in Kontakt, und kann hierdurch die Verformung des flexiblen Elements 121a steuern. Das flexible Element 121a, welches vom Düsenschlitz her mit dem Druck der Förderpumpe beaufschlagt ist, wird durch die Gegenkraft bzw. steigende Gegenkraft des Aktors 124a (zweite Schaltstellung) in seiner Position bzw. Form gehalten, d.h. der Aktor drückt das flexible Element 121a in Richtung des Düsenschlitzes 130, jedoch wird hierbei der Düsenschlitz 130 nicht verengt.

Ebenfalls im selben Düsenbacken 103 ist zusätzlich eine weitere Verstelleinheit 120b integriert, wobei diese zwischen der Verstelleinheit 120b und dem Zulaufkanal 107 positioniert ist. Hierdurch ist das Volumen im Düsenschlitz 103 ebenfalls variierbar, wobei mit der Verstelleinheit 120b keine Volumenvergrößerung des Düsenschlitzes 103 beabsichtigt ist. Der Druck verläuft innerhalb des Düsenkörpers 100 bzw. dem Düsenschlitz 103 beginnend vom Zulaufkanal 107 bis zum Austrittsspalt 130 stetig fallend. Die Scherspannung τ liegt über den gesamten Düsenschlitz 103 oberhalb der Fließgrenze τ_{f}.

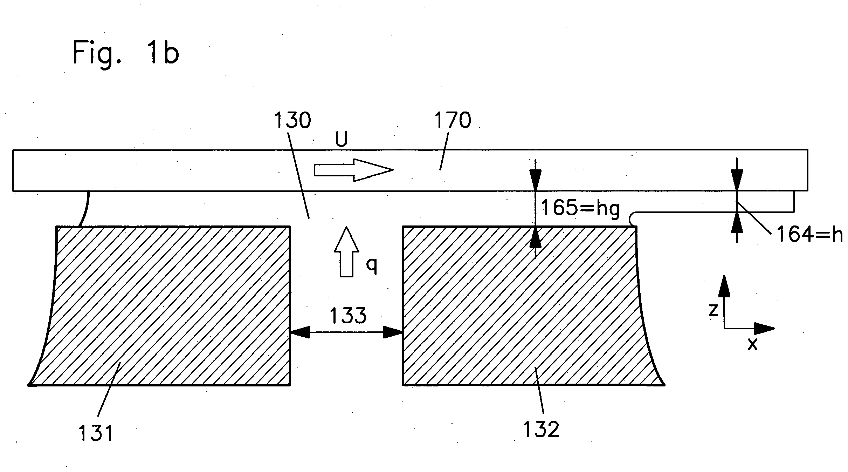

### Fig. 1b: Schematische Darstellung der geometrischen Verhältnisse am Austrittspalt

in Fig. 1b ist eine schematische Darstellung der geometrischen Verhältnisse am Austrittspalt 130 wiedergegeben. Der Düsenschlitz 103 endet quer zur Transportrichtung U des Substrats 170 und parallel zum Substrat 170 als Austrittsspalt 130 des Düsenkörpers 100 vgl. Fig. 1a, wobei der Austrittsspalt 130 über den Düsenschlitz 103 in Strömungsverbindung mit dem Zulaufkanal 107 vgl. Fig. 1a ist. Die Breite des Austrittspalts 165 entspricht hier der Dicke der Einlagefolie 108 und definiert den Abstand zwischen der Stromaufwärts gelegenen Düsenlippe 131 und der Stromabwärts gelegenen Düsenlippe 132. Zwischen dem Austrittsspalt 130 bzw. den beiden Düsenlippen (131,132) und dem in Bewegung befindlichen Substrat 170 bildet sich während des Beschichtungsprozesses eine Flüssigkeitsbrücke 160 aus. Die Dicke der Flüssigkeitsbrücke 165 ist höher als die gewünschte Nassfilmdicke 164.

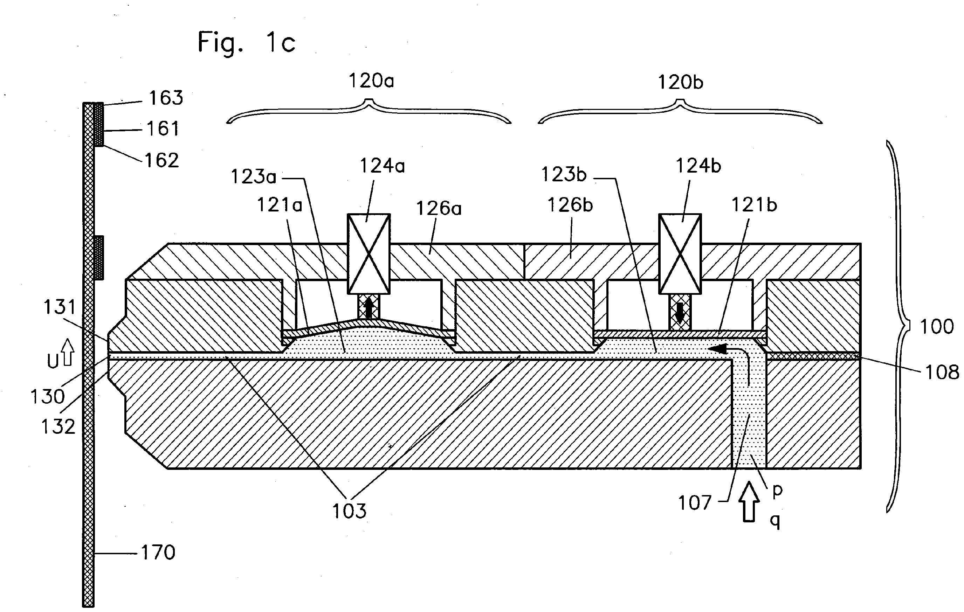

### Fig. 1c: Schematische Darstellungen einer erfindungsgemäßen Vorrichtung zum intermittierenden Beschichten mit variablem Innenvolumen, während der Unterbrechungsphase.

In Fig. 1c ist die erfindungsgemäße Vorrichtung schematische während des Beginns der Unterbrechungsphase dargestellt. Hier wird durch das Deaktivieren des Aktors 124a, das flexible Element 121a, nur durch die Wirkung des Systemdrucks p derart verformt, dass dies eine Vergrößerung des Volumens in diesem Abschnitt des Düsenschlitzes 103 zur Folge hat. Die zeitliche Änderung der Vergrößerung des Volumens in diesem Abschnitt wird so eingestellt, dass der weiterhin anströmende Beschichtungsstoff in das variable Volumen des Düsenschlitzes 103 aufgenommen wird. Der Druck innerhalb des Düsenschlitzes 103 in Richtung des Austrittsspalts 130 fällt zeitgleich hierdurch sofort annähernd auf Umgebungsdruck ab. Hierdurch kommt es zum Abreißen der Flüssigkeitsbrücke 160 vgl. Fig. 1b. am Düsenschlitz 103. Dementsprechend liegt die Scherspannung τ, in Richtung des Austrittsspalts 130, unterhalb der Fließgrenze τ_{f}. Jedoch bleibt Scherspannung τ in ihrer Richtung zu Austrittsspalts 130 unverändert und ist grösser > 0. Zeitgleich wird durch Aktivierung des Aktors 124b das flexible Element 121b derart verformt, dass dies eine Verringerung des Düsenschlitzes 103 zur Folge hat. Hierdurch wird eine Verengung im Düsenschlitz 103 erzeugt, welche eine lokale Druckerhöhung mit sich bringt. Hierbei wird die Scherspannung τ im Beschichtungsstoff gesteigert und die Flussgeschwindigkeit in diesem nimmt Abschnitt, zu. Somit werden lokale Druckschwankungen erzeugt welche sich direkt in lokale Fließgeschwindigkeiten auswirken um den Beschichtungsvorgang optimal zu regeln.

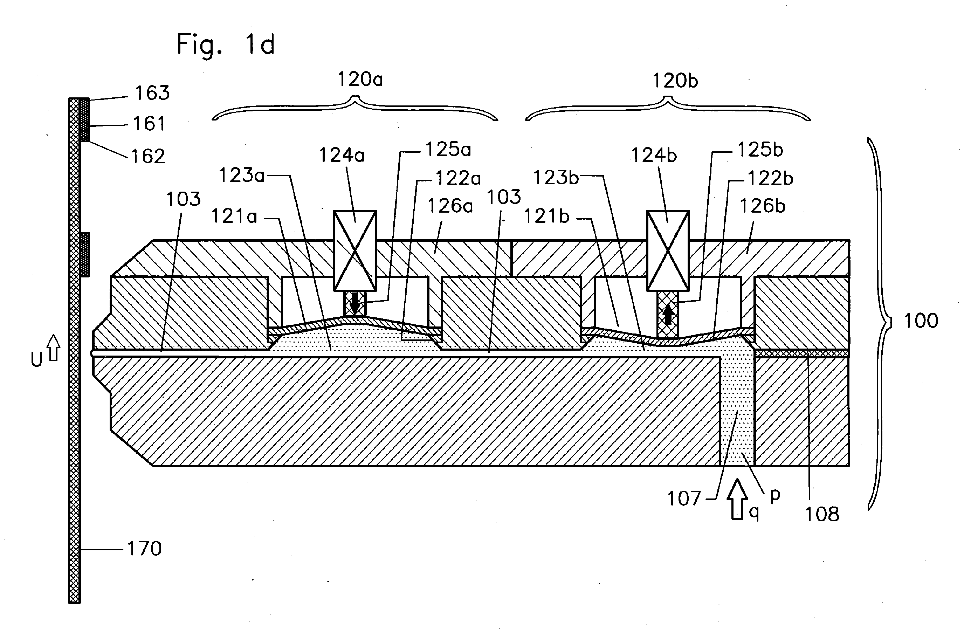

### Fig. 1d: Schematische Darstellungen einer erfindungsgemäßen Vorrichtung zum intermittierenden Beschichten mit variablem Innenvolumen, während dem Ende der Unterbrechungsphase bzw. Start der Beschichtungsphase.

Zu Beginn der darauffolgenden Beschichtungsphase wird durch die Verstelleinheit 120a der Austrittsspalt 130 bzw. das variable Innenvolumen im Bereich des flexiblen Elements 121a verkleinert.

Eine geringfügige Volumenänderung und der daraus erhöhte resultierenden Druck im Beschichtungsstoff reicht aus um die Fließgrenze τ_{f} des Beschichtungsstoffs zu überwinden. Die noch anliegende Scherspannung τ im Beschichtungsstoff in dem Düsenschlitz 103 zwischen dem Austrittspalt 130 und dem Bereich um das flexible Element 124a reduziert den notwendigen Anfangsimpuls. Das variable Innenvolumen wird nun über die gesamte Beschichtungsphase verteilt kontinuierlich verkleinert bzw. das flexible Element 121 wird derart verformt das sich der Düsenschlitzes 103 in verkleinert, jedoch nicht kleiner wird als die durch die Einlagefolie 108 eingestellte Spaltbreite 133.

Hierbei wird der bereits in dem variablen Innenvolumen vorhanden Beschichtungsstoff dem Fördervolumenstrom q zugeführt. Für eine definierte Nassfilmdicke 164 wird die Geschwindigkeit des zugeführten Beschichtungsstoffs an die Substratgeschwindigkeit angepasst. Die Anpassung erfolgt dementsprechend durch die Bewegungsgeschwindigkeit bzw. durch den zeitlichen Verlauf der entgegengesetzten Kraft durch den Aktors 124a.

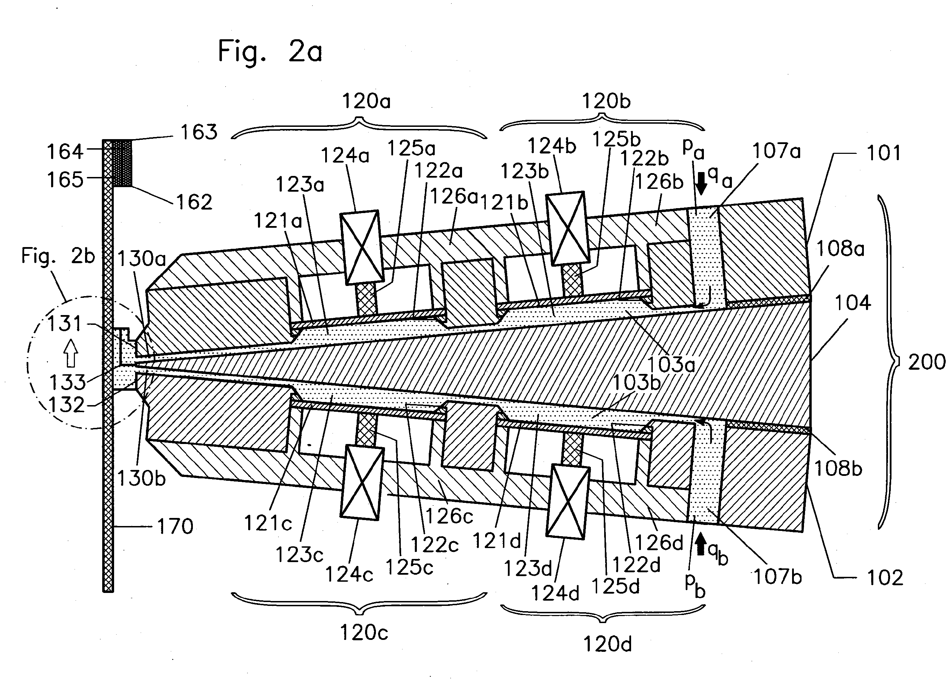

### Fig. 2a: Schematische Darstellungen einer erfindungsgemäßen Vorrichtung zum intermittierenden Beschichten mit variablem Innenvolumen mit Doppelspalt

Gemäß **Fig. 2a** sind die Düsenbacken 101,102 der Vorrichtung 200 zusammen mit der Verstelleinheit 120a und 120b, sowie 120c und 120d um eine vorzugsweise keilförmige Trennplatte 104, gespiegelt angeordnet.

Dementsprechend ergibt sich mit einer zusätzlichen Einlagefolie 108 zwischen der Trennplatte 104 und dem Düsenbacken 102 ein weiterer Düsenschlitz 103.

Hierdurch ist zum einen möglich,eine simultane Beschichtung von zwei unterschiedlichen Beschichtungsstoffen und zum anderen eine Beschichtung mit demselben Beschichtungsstoff in der doppelten Geschwindigkeit durchzuführen. Zudem kann eine Beschichtung in zwei Lagen vorgenommen werden.

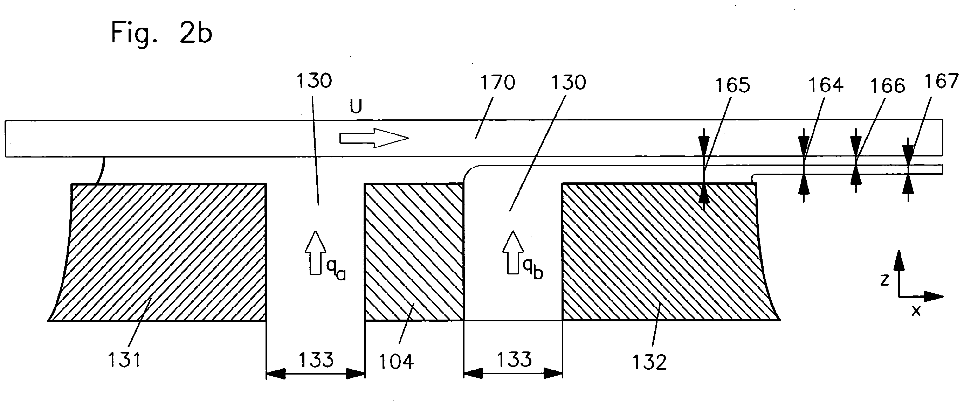

### Fig. 2b: Schematische Darstellung der geometrischen Verhältnisse am Austrittspalt einer erfindungsgemäßen Vorrichtung mit Doppelspalt

In Fig. 2b ist eine schematische Darstellung der geometrischen Verhältnisse am Austrittspalt 130 wiedergegeben. Die Düsenschlitze 103 enden jeweils quer zur Transportrichtung U des Substrats 170 und parallel zum Substrat 170 als Austrittsspalt 130 des Düsenkörpers 200 vgl. Fig. 2b, wobei der jeweilige Austrittsspalt 130 über den jeweiligen Düsenschlitz 103 in Strömungsverbindung mit dem jeweiligen Zulaufkanal 107 vgl. Fig. 2 ist.

Die Breite des jeweiligen Austrittspalts 133 entspricht hier der Dicke der Einlagefolie 108 und definiert den Abstand zwischen der Stromaufwärts gelegenen Düsenlippe 131 und der Stromabwärts gelegenen Düsenlippe 132. Dazwischen ist die Trennplatte 104 angeordnet.

Somit ergibt sich ein weiterer Austrittspalt 133 der einem unterschiedlichen Beschichtungsstoff beschickt wird. Zwischen dem jeweiligen Austrittsspalt 130 bzw. den beiden Düsenlippen 131, 132 und dem in Bewegung befindlichen Substrat 170 bildet sich während des Beschichtungsprozesses eine Flüssigkeitsbrücke 160 aus. Die Flüssigkeitsbrücke 160 unterscheidet sich hier allerdings von der in Fig. 1b, in derart das die Dicke der Flüssigkeitsbrücke 160 sich aus beiden Teilströmen qₐ und q_{b} ergibt. Dementsprechend resultiert die Nassfilmdicke 164 aus der Nassfilmdicke des Beschichtungsstoffs A 166 und der Nassfilmdicke des Beschichtungsstoffs B 167 sich.

### Bezugszeichenliste

- 100, 200: Vorrichtung zum intermittierenden Beschichten
- 101: Düsenbacken
- 102: Düsenbacken
- 103: Düsenschlitz
- 104: Trennplatte
- 105: Düsenbackenausfräsung

- 107: Zulaufkanal
- 108: Einlagefolie
- 120: Verstelleinheit
- 121: Flexibles Element
- 122: Dichtelement
- 123: Durchbruch
- 124: Aktor Punkt- oder linienförmiger oder flächiger Aufsatz
- 125: des Aktors
- 126: Abdeckung.

- 130: Austrittsspalt
- 131: Stromaufwärts gelegene Düsenlippe
- 132: Stromabwärts gelegene Düsenlippe
- 133: Breite Austrittspalt
- 160: Flüssigkeitsbrücke
- 161: Nassfilm, Flüssigkeitsfilm auf dem Substrat
- 162: Stoppkante, Filmstoppkante
- 163: Startkante, Filmstartkante
- 164: Nassfilmdicke
- 165: Dicke der Flüssigkeitsbrücke 160
- 166: Nassfilmdicke des Beschichtungsstoffs A
- 167: Nassfilmdicke des Beschichtungsstoffs B
- 170: Substrat
- U: Bewegungsrichtung des Substrat
- q, qₐ, q_{b}: Fördervolumenstrom
- p: Druck

## Patentansprüche

1. Vorrichtung zum intermittierenden Beschichten eines relativ zur Vorrichtung in einer Transportrichtung U in Bewegung befindlichen Substrats, umfassend
einen Düsenkörper (100) mit mindestens zwei Düsenbacken (101, 102), wobei zwischen den Düsenbacken (101, 102) eine Einlagefolie (108) mit einer Aussparung vorgesehen ist, wobei die Aussparung in der Einlagefolie (108) einen Düsenschlitz (103) innerhalb des Düsenkörpers (100) bildet, und der Düsenschlitz (103) quer zur Transportrichtung U des Substrats (170) und parallel zum Substrat (170) erstreckend in einem Austrittsspalts (130) endet, wobei der Austrittsspalt (130) über den Düsenschlitz (103) in Strömungsverbindung mit einem Zulaufkanal (107) ist und wenigstens eine Düsenbacke (101, 102) mit mindestens zwei Durchbrüchen (123a, 123b) versehen ist, welche zwischen dem Zulaufkanal und dem Austrittsspalt (130) in den Düsenschlitz (103) ausmünden und jeweils mit einem elastischen verformbaren Element (121a, 121b) fluiddichtend zum Düsenschlitz (103) unter Ausbildung eines Volumens hin verschlossen sind, wobei
jedes elastisch verformbare Element (121a, 121b) einerseits mit dem Beschichtungsstoff im Düsenschlitz (103) und andererseits mit einem Aktor (124a, 124b) in Richtung des Düsenschlitzes (103) wirkend verbunden ist,
**dadurch gekennzeichnet, dass**
die mindestens zwei Durchbrüche seriell in den Düsenschlitz ausmünden, wobei die Durchbrüche (123a, 123b) eines Düsenbackens (101, 102) aufeinanderfolgend in Flussrichtung q des Beschichtungsstoffs ausgehend vom Zulaufkanal (107) zum Austrittsspalts (130) hin angeordnet sind,
die elastischen verformbaren Elemente (121a, 121b) durch die Aktoren (124a, 124b) gleichzeitig wechselseitig zwischen jeweils zwei Schaltstellungen unter Veränderung des jeweiligen Volumens be- und entlastbar sind.

2. Vorrichtung nach Anspruch 1,
**dadurch gekennzeichnet, dass**
zwischen den Düsenbacken (101,102) eine Trennplatte (104) angeordneten ist,
und zwischen jeder Düsenbacke (101,102) und der Trennplatte (104) jeweils eine Einlagefolie (108) mit einer Aussparung vorgesehen ist, wobei die jeweilige Einlagefolie (108a, 108b) jeweils einen Düsenschlitz (103a, 103b) innerhalb des Düsenkörpers (200) bildet.

3. Vorrichtung nach Anspruch 1 oder 2,
**dadurch gekennzeichnet, dass**
die Dicke der Einlagefolie (108) zwischen 0,01 mm und 3,00 mm beträgt.

4. Vorrichtung nach einem der Vorhergehenden Ansprüche Wobei die Durchbrüche (123a,123b) nur in einer Düsenbacke (101) angeordnet sind und die gegenüberliegende Düsenbacke(102) keine Durchbrüche aufweist.

5. Verfahren zum intermittierenden Beschichten von einem in Bewegung befindlichen Substrat mit einer Vorrichtung nach den Ansprüchen 1,2 oder 3
wobei das Fördervolumenstrom q über alle Verfahrensschritte konstant bleibt, umfassend folgende Verfahrensschritte:
a) Kontinuierliches Zuführen eines Beschichtungsstoffs ausgehend vom Zuführkanal (107) über den Düsenschlitz (103) zum Austrittsspalt (130),
b) Entlasten des flexiblen Elements (121a) im Durchbruch (123a) durch Deaktivierung des Aktors (124a),
c) Zeitgleiches Belasten des flexiblen Elements (121b) im Durchbruch (123b) durch Aktivierung des Aktors (124b),
d) Belasten des flexiblen Elements (121a) im Durchbruch (123a) durch Aktivierung des Aktors (124a),
e) Zeitgleiches Entlasten des flexiblen Elements (121b) im Durchbruch (123b) durch Deaktivierung des Aktors (124b).

6. Verfahren zum intermittierenden Beschichten von einem in Bewegung befindlichen Substrat mit einer Vorrichtung nach dem Anspruch 2 oder 3
wobei die Fördervolumenstrom qₐ, q_{b} über alle Verfahrensschritte konstant bleiben, umfassend folgende Verfahrensschritte:
a) Kontinuierliches Zuführen eines Beschichtungsstoffs ausgehend vom Zuführkanal (107a, 107b) über den Düsenschlitz (103a, 103b) zum Austrittsspalt (130a, 130b),
b) Entlasten der flexiblen Elemente (121a, 121c) im Durchbruch (123a, 123c) durch Deaktivierung der Aktoren (124a, 124c),
c) Zeitgleiches Belasten der flexiblen Elemente (121b, 121d) in den Durchbrüchen (123b, 123d) durch Aktivierung der Aktoren (124b,124d),
d) Belasten der flexiblen Elemente, (121a, 121c) in den Durchbrüchen (123b,123d) durch Aktivierung der Aktoren (124a, c),
e) Zeitgleiches Entlasten der flexiblen Elemente (121b,121d) in den Durchbrüchen (123b,123d) durch Deaktivierung des Aktors (124b,124d).

7. Verfahren zum intermittierenden Beschichten von einem in Bewegung befindlichen Substrat mit einer Vorrichtung nach dem Anspruch 2 oder 3
wobei der Fördervolumenstrom qₐ, q_{b} über alle Verfahrensschritte konstant bleiben, umfassend folgende Verfahrensschritte:
a) Kontinuierliches Zuführen eines Beschichtungsstoffs ausgehend vom Zuführkanal (107a, 107b) über den Düsenschlitz (103a, 103b) zum Austrittsspalt (130a, 130b),
b) Entlasten des flexiblen Elements (121a) im Durchbruch (123a) durch Deaktivierung des Aktors (124a),
c) Zeitgleiches Belasten des flexiblen Elements (121b) im Durchbruch (123b) durch Aktivierung des Aktors (124b),
d) Belasten des flexiblen Elements (121c) im Durchbruch (123c) durch Aktivierung des Aktors (124c),
e) Zeitgleiches Entlasten des flexiblen Elements (121d) im Durchbruch (123d) durch Deaktivierung des Aktors (124d),
f) Entlasten des flexiblen Elements (121c) im Durchbruch (123c) durch Deaktivierung des Aktors (124c),
g) Zeitgleiches Belasten des flexiblen Elements (121d) im Durchbruch (123d) durch Aktivierung des Aktors (124d),
h) Belasten des flexiblen Elements (121a) im Durchbruch (123b) durch Aktivierung des Aktors (124a),
i) Zeitgleiches Entlasten des flexiblen Elements (121b) im Durchbruch (123b) durch Deaktivierung des Aktors (124b).

## Claims

1. Device for the intermittent coating of a substrate being moved relative to the device in a transport direction U, comprising
a nozzle body (100) with at least two nozzle blocks (101, 102), wherein provided between the nozzle jaws (101, 102), is an insertion film (108) with a cut-out opening, wherein the cut-out opening in the insertion film (108) forms a nozzle slot (103) inside the nozzle body (100), and the nozzle slot (103), extending transverse to the transport direction U of the substrate (170) and parallel to the substrate (170), ends in an outlet gap (130), wherein the outlet gap (130) is in flow connection via the nozzle slot (103) with a delivery channel (107), and at least one nozzle block (101, 102) is provided with at least two passage openings (123a, 123b), which open between the delivery channel and the outlet gap (130) into the nozzle slot (103) and are in each case closed with an elastically deformable element 121b) fluid-tight towards the nozzle slot (103) with the formation of a volume, wherein
each elastically deformable element (121a, 121b) is on the one hand in operational effect connection with the coating material in the nozzle slot (103) and, on the other, with an actuator (124a, 124b), taking effect in the direction of the nozzle slot (103),
**characterised in that**
the at least two passage openings open in serial fashion into the nozzle slot, wherein the passage openings (123a, 123b) of a nozzle block (101, 102) are arranged following one another in the flow direction q of the coating material, going from the intake channel (107) to the outlet gap (130),
the elastically deformable elements (121a, 121b) can be subjected to load and relieved of load by the actuators (124a, 124b) simultaneously and alternating in each case between two switching positions, with the changing of the respective volume.

2. Device according to claim 1,
**characterised in that**
a separation plate (104) is arranged between the nozzle blocks (101, 102),
and provided in each case between each nozzle block (101, 102) and the separation plate (104) is an insertion film (108) with a cut-out opening, wherein the respective insertion film (108a, 108b) forms in each case a nozzle slot (103a, 103b) inside the nozzle body (200).

3. Device according to claim 1 or 2,
**characterised in that**
the thickness of the insertion film (108) is between 0.01 mm and 3.00 mm.

4. Device according to any one of the preceding claims, wherein the passage openings (123a, 123b) are arranged only in one nozzle block (101), and the opposing nozzle block (102) does not comprise any passage openings.

5. Method for the intermittent coating of a substrate which is in motion, with a device in accordance with claims 1, 2 or 3, wherein the conveying volume q remains constant over all the method steps, and comprising the following method steps:
a) continuously delivering a coating material, starting from the delivery channel (107) via the nozzle slot (103) to the outlet gap (130),
b) relieving the load on the flexible element (121a) in the passage opening (123a) by deactivation of the actuator (124a),
c) simultaneously loading the flexible element (121b) in the passage opening (123b) by activation of the actuator (124b),
d) loading the flexible element (121a) in the passage opening (123a) by activation of the actuator (124a),
e) simultaneously relieving the load on the flexible element (121b) in the passage opening (123b) by the deactivation of the actuator (124b).

6. Method for the intermittent coating of a substrate which is in motion, with a device in accordance with claim 2 or 3,
wherein the conveying volume qₐ, q_{b} remains constant over all the method steps, and comprising the following method steps:
a) continuously delivering a coating material, starting from the delivery channel (107a, 107b) via the nozzle slot (103a, 103b)) to the outlet gap (130a, 130b),
b) relieving the load on the flexible element (121a, 121c) in the passage opening (123a, 123c) by deactivation of the actuator (124a, 124c),
c) simultaneously loading the flexible element (121b, 121d) in the passage opening (123b, 123d) by activation of the actuators (124b, 124d),
d) loading the flexible element (121a, 121c) in the passage opening (123b 123d) by activation of the actuators (124a, c),
e) simultaneously relieving the load on the flexible element (121b 121d) in the passage opening (123b, 123d) by the deactivation of the actuator (124b, 124d).

7. Method for the intermittent coating of a substrate which is in motion, with a device in accordance with claim 2 or 3,
wherein the conveying volume qₐ, q_{b} remains constant over all the method steps, and comprising the following method steps:
a) continuously delivering a coating material, starting from the delivery channel (107a, 107b) via the nozzle slot (103a, 103b)) to the outlet gap (130a, 130b),
b) relieving the load on the flexible element (121a) in the passage opening (123a) by deactivation of the actuator (124a),
c) simultaneously loading the flexible element (121b) in the passage opening (123b) by activation of the actuator (124b),
d) loading the flexible element (121c) in the passage opening (123c) by activation of the actuators (124c),
e) simultaneously relieving the load on the flexible element (121d) in the passage opening (123d) by the deactivation of the actuator (124d).
f) relieving the load on the flexible element (121c) in the passage opening (123c) by deactivation of the actuator (124c),
g) simultaneously loading the flexible element (121d) in the passage opening (123d) by activation of the actuator (124d),
h) loading of the flexible element (121a) in the passage opening (123b) by activation of the actuators (124a),
i) simultaneously relieving the load on the flexible element (121b) in the passage opening (123b) by the deactivation of the actuator (124b).

## Revendications

1. Dispositif de revêtement intermittent d'un substrat se déplaçant relativement au dispositif dans une direction de transport U comprenant :
- un corps de buse (100) ayant au moins deux mâchoires de buse (101, 102), entre ces mâchoires de buse (101, 102) étant insérée une feuille (108) ayant un évidement, l'évidement de la feuille insérée (108) formant une fente de buse (103) à la partie interne du corps de buse (100) et la fente de buse (103) se terminant par un intervalle de sortie (130) s'étendant transversalement à la direction de transport U du substrat (170) et parallèlement au substrat (170), l'intervalle de sortie (130) étant en liaison fluidique par l'intermédiaire de la fente de buse (103) avec un canal d'entrée (107) et, au moins une mâchoire de buse (101, 102) comportant au moins deux ouvertures (123a, 123b) débouchant entre le canal d'entrée et l'intervalle de sortie (130) dans la fente de buse (103) et étant respectivement fermées par un élément élastiquement déformable 121b) de façon étanche aux fluides par rapport à la fente de buse (103) en formant un volume,
- chaque élément élastiquement déformable 121b) étant fonctionnellement relié d'une part avec le matériau de revêtement situé dans la fente de buse (103) et d'autre part avec un actionneur (124a, 124b) dans la direction de la fente de buse (103),
**caractérisé en ce que**
les ouvertures débouchent en série dans la fente de buse, les ouvertures (123a, 123b) d'une mâchoire de buse (101, 102) étant successivement positionnés dans la direction de circulation q du matériau de revêtement du canal d'entrée (107) vers l'intervalle de sortie (130), les éléments élastiquement déformables 121b) pouvant être simultanément, alternativement chargés et déchargés par les actionneurs (124a, 124b) entre respectivement deux positions de commutation en modifiant le volume respectif.

2. Dispositif conforme à la revendications 1,
**caractérisé en ce qu'**
une plaque de séparation (104) est montée entre les mâchoires de buse (101, 102), et entre chaque mâchoire de buse (101, 102) et la plaque de séparation (104) est respectivement insérée une feuille (108) ayant un évidement, les feuilles insérées (108a, 108b) formant respectivement une fente de buse (103a, 103b) à la partie interne du corps de buse (200).

3. Dispositif conforme à la revendication 1 ou 2,
**caractérisé en ce que**
l'épaisseur de la feuille insérée (108) est comprise entre 0,01mm et 3,00 mm.

4. Dispositif conforme à l'une des revendications précédentes,
dans lequel
les ouvertures (123a, 123b) ne sont situées que dans une mâchoire de buse (101) et la mâchoire de buse (102) opposée ne comporte pas d'ouverture.

5. Procédé de revêtement intermittent d'un substrat en mouvement à l'aide d'un dispositif conforme à l'une des revendications 1, 2 ou 3, selon lequel
le débit volumique refoulé q reste constant pendant toute les étapes du procédé, ce procédé comprenant les étapes suivantes consistant à :
a) fournir en continu un matériau de revêtement à partir d'un canal d'entrée (107) par la fente de buse (103) vers l'intervalle de sortie (130),
b) décharger l'élément flexible (121a) situé dans l'ouverture (123a) en désactivant l'actionneur (124a),
c) décharger simultanément l'élément flexible (121b) situé dans l'ouverture (123b) en activant l'actionneur (124b),
d) charger l'élément flexible (121a) situé dans l'ouverture (123a) en activant l'actionneur (124a),
e) décharger simultanément l'élément flexible (121b) situé dans l'ouverture (123b) en désactivant l'actionneur (124b).

6. Procédé de revêtement intermittent d'un substrat en mouvement avec un dispositif conforme à l'une des revendications 2 et 3,
selon lequel le débit volumique refoulé qₐ, q_{b} reste constant pendant toutes les étapes du procédé, comprenant les étapes suivantes consistant à :
a) fournir en continu un matériau de revêtement à partir du canal d'alimentation (107a, 107b) par la fente de buse (103a, 103b) vers l'intervalle de sortie (130a, 130b),
b) décharger les éléments flexibles 121c) situés dans l'ouverture (123a, 123c) en désactivant les actionneurs (124a, 124c),
c) charger simultanément les élément flexibles (121b, 121d) situés dans les ouvertures (123b, 123d) en activant les actionneurs (124b, 124d),
d) charger les éléments flexibles (121a, 121c) situés dans les ouvertures (123b, 123d) en activant les actionneurs (124a, c),
e) décharger simultanément les éléments flexibles (121b, 121d) situés dans les ouvertures (123b, 123d) en désactivant l'actionneur (124b, 124d).

7. Procédé de revêtement intermittent d'un substrat en mouvement à l'aide d'un dispositif conforme à la revendication 2 ou 3,
selon lequel
le débit volumique refoulé qₐ, q_{b} reste constant pendant toute les étapes du procédé, comprenant les étapes de procédé suivantes consistant à :
a) fournir en continu un matériau de revêtement à partir du canal d'entrée (107a, 107b) par la fente de buse (103a, 103b) vers l'intervalle de sortie (130a, 130b),
b) décharger l'élément flexible (121a) situé dans l'ouverture (123a) en désactivant l'actionneur (124a),
c) charger simultanément l'élément flexible (121b) situé dans l'ouverture (123b) en activant l'actionneur (124b),
d) charger l'élément flexible (121c) situé dans l'ouverture (123c) en activant l'actionneur (124c),
e) décharger simultanément l'élément flexible (121d) situé dans l'ouverture (123d) en désactivant l'actionneur (124d),
f) décharger l'élément flexible (121c) situé dans l'ouverture (123c) en désactivant l'actionneur (124c),
g) charger simultanément l'élément flexible (121d) situé dans l'ouverture (123d) en activant l'actionneur (124d),
h) charger l'élément flexible (121a) situé dans l'ouverture (123b) en activant l'actionneur (124a),
i) décharger simultanément l'élément flexible (121b) situé dans l'ouverture (123b) en désactivant l'actionneur (124b).
